# EUROPEAN PATENT APPLICATION

(11) **EP 4 529 283 A1**
(43) Date of publication of application: **26.03.2025**
(21) Application number: 23806925.6
(22) Date of filing: 16.05.2023
(51) Int. Cl.: H04W 48/16

(54) **CELL REGISTRATION METHOD AND TERMINAL**

(30) Priority: 20.05.2022 CN 202210553414
(71) Applicant: Vivo Mobile Communication Co., Ltd., Dongguan, Guangdong 523863 (CN)
(72) Inventor: ZHU, Yuejun, Dongguan, Guangdong 523863 (CN)
(74) Representative: Lavoix
(86) International application number: PCT/CN2023/094513
(87) International publication number: WO 2023/221973

(57) **Abstract**

This application discloses a cell registration method and a terminal, and relates to the field of communication technologies. The cell registration method includes: acquiring a first frequency band range of a first cell; and prohibiting registration of the terminal in the first cell in a case that the first frequency band range is not within a second frequency band range supported by the terminal.

## Description

### CROSS-REFERENCE TO RELATED APPLICATIONS

This application claims priority to Chinese Patent Application No. 202210553414.1 filed on May 20, 2022, which is incorporated herein by reference in its entirety.

### TECHNICAL FIELD

This application relates to the field of communication technologies, and specifically, to a cell registration method and a terminal.

### BACKGROUND

At present, for 5G new radio (New Radio, NR) bands, since some terminals are restricted by early network deployment or hardware capability limitations, frequency bandwidths supported by power amplifiers (Power Amplifier, PA) thereof are only parts of specific full bands. In a case that a terminal is to register to a standalone (Standalone, SA) or non-standalone (Non-Standalone, NSA) network, if the band configured for the network is a band outside the band supported by the terminal, the terminal will fail to register in the band configured for the network. As a result, the terminal will cyclically register in a full band where the band supported by the terminal is located, resulting in high power consumption.

### SUMMARY

The objective of embodiments of this application is to provide a cell registration method and a terminal. This application can solve the problem of high power consumption caused by cyclic registration of a terminal in a full band where a band supported by the terminal is located.

According to a first aspect, an embodiment of this application provides a cell registration method, applied to a terminal, and including:
acquiring a first frequency band range of a first cell; and
prohibiting registration of the terminal in the first cell in a case that the first frequency band range is not within a second frequency band range supported by the terminal.

According to a second aspect, an embodiment of this application provides a terminal, including:
a first acquisition module, configured to acquire a first frequency band range of a first cell; and
a first registration module, configured to prohibit registration of the terminal in the first cell in a case that the first frequency band range is not within a second frequency band range supported by the terminal.

According to a third aspect, an embodiment of this application provides a terminal, including a processor, a memory, and a program or instructions stored on the memory and capable of being run on the processor, where when the program or instructions are executed by the processor, the steps of the method according to the first aspect are implemented.

According to a fourth aspect, an embodiment of this application provides a readable storage medium, where a program or instructions are stored in the readable storage medium, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instructions to implement the method according to the first aspect.

According to a sixth aspect, an embodiment of this application provides a computer program product, where the program product is stored in a storage medium, and the program product is executed by at least one processor to implement the method according to the first aspect.

According to a seventh aspect, an embodiment of this application further provides a communication device, where the communication device is configured to perform the method according to the first aspect.

In embodiments of this application, the first frequency band range of the first cell is compared with the second frequency band range supported by the terminal, and registration of the terminal in the first cell is prohibited in a case that the first frequency band range is not within the second frequency band range supported by the terminal, such that a cyclic registration attempt of the terminal in the first cell having the frequency band range not supported by the terminal can be avoided, thereby reducing power consumption of the terminal.

### BRIEF DESCRIPTION OF THE DRAWINGS

FIG. 1 is a first schematic flow chart of a cell registration method applied to a terminal according to an embodiment of this application;
FIG. 2 is a second schematic flow chart of a cell registration method according to an embodiment of this application;
FIG. 3 is a third schematic flow chart of a cell registration method according to an embodiment of this application;
FIG. 4 is a first schematic diagram of a structure of a terminal according to an embodiment of this application;
FIG. 5 is a second schematic diagram of a structure of a terminal according to an embodiment of this application; and
FIG. 6 is a third schematic diagram of a structure of a terminal according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person skilled in the art based on embodiments of this application fall within the protection scope of this application.

Terms "first", "second" and the like in the description and claims of this application are used to distinguish similar objects, but are unnecessarily used to describe a specific sequence or order. It should be understood that data used in this way is exchangeable in a proper case, so that embodiments of this application can be implemented in an order different from the order shown or described herein. Furthermore, the objects distinguished by "first", "second" and the like are usually of one category, and the number of objects is not defined. For example, one or more first objects may be present. In addition, "and/or" in the description and claims represents at least one of connected objects, and the character "/" generally represents that the preceding and latter associated objects are in an "or" relation.

The cell registration method and the terminal according to embodiments of this application are described in details below through specific embodiments and application scenarios thereof in combination with the accompanying drawings.

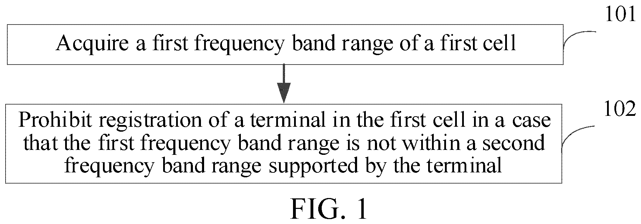

Refer to FIG. 1. FIG. 1 is a schematic flow chart of a cell registration method applied to a terminal according to an embodiment of this application. As shown in FIG. 1, an embodiment of the first aspect of this application provides a cell registration method. The method is applied to a terminal. The method includes the following steps.

Step 101: Acquire a first frequency band range of a first cell.

The first cell may be a cell found by the terminal. For example, in a process of the terminal accessing SA, the found cell is the first cell. For another example, in a process of the terminal accessing NSA, a secondary cell needs to be added, and then the secondary cell is the first cell.

Step 102: Prohibit registration of the terminal in the first cell in a case that the first frequency band range is not within a second frequency band range supported by the terminal.

It should be noted that a frequency range supported and reported by a terminal is a frequency range of a full band corresponding to a frequency band range supported by the terminal. The first cell is a cell corresponding to the frequency range supported and reported by the terminal. In a case that the frequency band range supported by the terminal is a frequency range of a specific full band, the frequency band range of the first cell may be consistent with the frequency band range supported by the terminal, and therefore the terminal can register in the first cell; and in a case that the frequency band range supported by the terminal is a frequency range of part of a specific full band, if the frequency band range of the first cell is also the frequency range of part of the band supported by the terminal, the terminal can register in the first cell.

It may be understood that the first frequency band range and the second frequency band range may be within frequency ranges of different parts of a specific full band. Specifically, a specific wide full band may include a plurality of sub-bands such as a first sub-band, a second sub-band, and a third sub-band. In a case that the first frequency band range and the second frequency band range respectively correspond to frequency ranges of two different sub-bands, that is, the terminal does not support the frequency band range of the first cell, but the band capability reported by the terminal is the full band, the terminal will attempt to register in the first cell. By prohibiting registration of the terminal in the first cell, cyclic registration of the terminal in the first cell is avoided, thereby reducing power consumption of the terminal.

For example, a wide N28 band may include two bands, i.e., an N28A band and an N28B band. In a case that the first frequency band range and the second frequency band range respectively correspond to a frequency range of the N28A band and a frequency range of the N28B band, that is, the terminal does not support the frequency band range of the first cell, after the first cell is found in the N28 band, the terminal can obtain that the frequency band range of the first cell is the frequency range of the N28B band, it can be determined that the frequency range of the N28B band is the frequency band range not supported by the terminal, and initiation of registration in the first cell is prohibited.

The first frequency band range may include a downlink frequency band range and an uplink frequency band range. Whether the downlink frequency band range and the uplink frequency band range are within the second frequency band range can be determined. For example, in time division duplexing (Time Division Duplexing, TDD), the downlink frequency band range and the uplink frequency band range are consistent, and thus whether either of the downlink frequency band range and the uplink frequency band range is within the second frequency band range can be determined. In frequency division duplexing (Frequency Division Duplexing, FDD), whether each of the downlink frequency band range and the uplink frequency band range is within the second frequency band range can be determined, separately. In a case that at least one of the downlink frequency band range and the uplink frequency band range is not within the second frequency band range, registration of the terminal in the first cell can be prohibited; and in a case that both the downlink frequency band range and the uplink frequency band range are within the second frequency band range, the terminal can register in the first cell. Therefore, power consumption caused by a cyclic registration attempt can be reduced, the time of disconnection of the terminal from a network is reduced, and thus the terminal network camp-on experience is improved and the terminal battery life is prolonged.

In embodiments of this application, the first frequency band range of the first cell is compared with the second frequency band range supported by the terminal, and registration of the terminal in the first cell is prohibited in a case that the first frequency band range is not within the second frequency band range supported by the terminal, such that a cyclic registration attempt of the terminal in the first cell having the frequency band range not supported by the terminal can be avoided, thereby reducing power consumption of the terminal.

Optionally, the acquiring a first frequency band range of a first cell in step 101 includes:
acquiring a first message sent by a network device, where the first message includes a frequency band parameter of the first cell; and
determining the first frequency band range based on the frequency band parameter.

Specifically, in the process of the terminal accessing SA, the first message may represent a system message, or a system information block 1 (System Information Block1, SIB1) in a system message; and in the process of the terminal accessing NSA, the first message may represent a radio resource control (Radio Resource Control, RRC) reconfiguration message for adding a secondary cell group (Secondary Cell Group, SCG). The frequency band range of the first cell is determined by acquiring the frequency band parameter, such as a cell frequency point, a carrier bandwidth (carrier Bandwidth, BW), and a subcarrier spacing (subcarrier spacing, SCS), of the first cell in the first message.

Optionally, the first message further includes a frequency range indication parameter for indicating a target frequency range; and
the determining the first frequency band range based on the frequency band parameter includes:
acquiring a preset reference frequency range; and
determining the first frequency band range based on the frequency band parameter in a case that the frequency range indication parameter matches the reference frequency range, where the first frequency band range is within the target frequency range.

It may be understood that the target frequency range is a frequency range corresponding to the first cell, that is, the first frequency band range is within the target frequency range, and the first frequency band range may be part of the target frequency range or the entire target frequency range.

Optionally, the frequency range indication parameter may be a band number. For example, the frequency range of 703-748 MHz (uplink)/758-803 MHz (downlink) may be represented by the band number N28, and the frequency range of 3300-3800 MHz may be represented by the band number N78.

A corresponding frequency range requiring determining whether the frequency band range supported by the terminal matches the frequency band range of the cell can be preset through the preset reference frequency range, that is, only the frequency range that matches the preset reference frequency range requires the foregoing determining, and whether to prohibit registration of the terminal in the corresponding cell is determined. The preset reference frequency range can be configured as a full band having a plurality of sub-bands. For a full band not having a plurality of sub-bands, the foregoing determining is not required. For example, the N28 band having two sub-bands, i.e., the N28A band and the N28B band, can be taken as the preset reference frequency range. In this case, if the frequency range of the cell in which the terminal registers is not within the frequency range of the N28 band, a registration attempt can be directly made; and if the frequency range of the cell in which the terminal registers is within the frequency range of the N28 band, the first frequency band range is acquired and compared with the second frequency band range supported by the terminal to determine whether it is required to prohibit registration in the first cell.

Moreover, the frequency range indication parameter is used for indicating the target frequency range. Therefore, the determining whether the frequency range indication parameter matches the reference frequency range refers to determining whether the target frequency range corresponding to the frequency range indication parameter matches the reference frequency range. Specifically, the reference frequency range can be configured as one or more frequency ranges. The frequency range indication parameter matching the reference frequency range may include the target frequency range being consistent with the reference frequency range, or the reference frequency range covering the target frequency range.

In this embodiment, in a case that the frequency range indication parameter matches the reference frequency range, the first frequency band range is determined based on the frequency band parameter. That is, for the frequency range matching the reference frequency range, whether to prohibit registration of the terminal in the first cell can be determined, such that targeting detection for the frequency range matching the preset reference frequency range can be performed, thereby further reducing power consumption of the terminal.

Optionally, the determining the first frequency band range based on the frequency band parameter includes:
calculating an upper boundary frequency and a lower boundary frequency of the first cell based on the frequency band parameter; and
determining the first frequency band range based on the upper boundary frequency and the lower boundary frequency; and
the prohibiting registration of the terminal in the first cell in a case that the first frequency band range is not within a second frequency band range supported by the terminal includes:
   prohibiting registration of the terminal in the first cell in a case that at least one of the upper boundary frequency and the lower boundary frequency is not within the second frequency band range.

The frequency band parameter may include parameters for calculating the first frequency band range, such as a cell frequency point (absoluteFrequencyPointA), a BW, and an SCS. Specifically, the center frequency of the first cell can be calculated based on the frequency band parameter, and then the upper boundary frequency and the lower boundary frequency of the first cell are calculated, so as to determine the first frequency band range of the first cell.

Specifically, by taking calculation based on the absoluteFrequencyPointA, the BW, and the SCS in downlink frequency information as an example, a process of calculating the center frequency, the upper boundary frequency, and the lower boundary frequency of the first cell is as follows:
determining a transmitting frequency of the first cell: *F_{REF} = F_{REF-Offs} +* Δ*F_{Global}*(*N_{REF}*-*N_{REF-Offs}*).

*N_{REF}* = absoluteFrequencyPointA , *F_{REF-offs}* represents an offset of the transmitting frequency, Δ*F_{Global}* represents a global frequency point grid, *N_{REF}* represents a cell frequency point number, *N_{REF-offs}* represents an offset of the cell frequency point, and *F_{REF-Offs},* Δ*F_{Global}* and*N_{REF-Offs}* can be determined by looking up Table 1 based on *N_{REF}.*

**Table 1**

| Frequency Range (Frequency range (MHz)) | ΔF_{Global} (kHz) | F_{REF-Offs} (MHz) | NREF-Offs | Range of N_{REF} (Range of N_{REF}) |
|---|---|---|---|---|
| 0-3000 | 5 | 0 | 0 | 0-599999 |
| 3000-24250 | 15 | 3000 | 600000 | 600000-2016666 |

In a case that the network configures that the offset to carrier (offsetToCarrier) is not equal to 0,
the center frequency=*F_{REF}* + [(offsetToCarrier + BW) _{*} 12 Subcarrier _{*} BW _{*} SCS _{*} 0.5] (the value of offsetToCarrier is a network configured value); and
in a case that the network does not configure offsetToCarrier, or the network configures that offsetToCarrier is equal to 0,
the center frequency= *F_{REF}* + (BW * 12 Subcarrier * BW * SCS * 0.5),
the upper boundary frequency=the center frequency+(12 Subcarrier * BW * SCS * 0.5), and
the lower boundary frequency=the center frequency-(12 Subcarrier * BW * SCS * 0.5).

In a case that the upper boundary frequency and the lower boundary frequency of the first cell are both within the second frequency band range, it means that the first frequency band range of the first cell is within the second frequency band range supported by the terminal, and registration is can be performed; and in a case that the upper boundary frequency of the first cell is not within the second frequency band range, or the lower boundary frequency is not within the second frequency band range, or the upper boundary frequency and the lower boundary frequency are not within the second frequency band range, it can be determined that the first frequency band range of the first cell is not within the second frequency band range, such that registration will fail even after a plurality of times of cyclic registration, and therefore registration of the terminal in the first cell can be prohibited.

Optionally, after the prohibiting registration of the terminal in the first cell in step 102, the method further includes:
acquiring historical information and a first cell parameter of the first cell, where the historical information includes a plurality of groups of cell parameters; and
adding the first cell parameter to the historical information in a case that the plurality of groups of cell parameters do not include the first cell parameter.

The historical information may be used to record a cell in which the terminal cannot successfully register, that is, each group of cell parameters corresponds to one cell. Specifically, A cell in which registration cannot be performed successfully may be identified through a physical cell identity, a cell frequency point number, a subcarrier spacing, and a carrier bandwidth. After it is determined that the first frequency band range of the first cell is not within the second frequency band range supported by the terminal, the first cell can be recorded through the historical information. In this way, in a case that the first cell is found again, the first cell can be directly determined through the historical information, and then registration of the terminal in the first cell is stopped.

Optionally, each group of cell parameters includes at least one of the following:
a physical cell identity; and
a cell frequency point number, a subcarrier spacing, and a carrier bandwidth.

It may be understood that the frequency band range of a cell can be determined through the cell frequency point number, the subcarrier spacing, and the carrier bandwidth. Therefore, in the cell having the matching cell frequency point number, the matching subcarrier spacing, and the matching carrier bandwidth, registration can be prohibited, or the cell in which registration is prohibited is identified through the physical cell identity (physical cell identity, PCI).

It should be noted that in a case that the plurality of groups of cell parameters include the first cell parameter, it means that the terminal has made a registration attempt in the first cell, and the first cell is determined as the cell in which registration is prohibited.

In this embodiment, through the plurality of groups of cell parameters in the historical information, the terminal can identify the cell in which registration of the terminal needs to be prohibited, such that after the cell in which registration of the terminal needs to be prohibited is determined, the corresponding cell can be determined through each group of cell parameters. As a result, there is no need to acquire the frequency band range of the cell again and then compare the frequency band range of the cell with the second frequency band range supported by the terminal to determine whether to stop registration of the terminal in the corresponding cell, thereby reducing the amount of calculation of the terminal and improving efficiency.

Optionally, after the prohibiting registration of the terminal in the first cell in step 102, the method further includes:
acquiring a second cell parameter of a second cell;
acquiring a third frequency band range of the second cell in a case that the plurality of groups of cell parameters do not include the second cell parameter; and
registering in the second cell in a case that the third frequency band range is within the second frequency band range.

The second cell may be a cell determined by searching in another frequency range, and whether registration can be performed in the second cell can be determined by acquiring the third frequency band range of the second cell and comparing the third frequency band range with the second frequency band range supported by the terminal.

In this embodiment, after registration of the terminal in the first cell is prohibited, the second cell meeting a registration condition can be found and determined, and in a case that the third frequency band range of the second cell is within the second frequency band range supported by the terminal, registration is performed in the second cell, such that cyclic registration of the terminal in a non-supported band can be avoided. Moreover, registration of the terminal in another band can be implemented.

The method provided in this application is exemplified as follows.

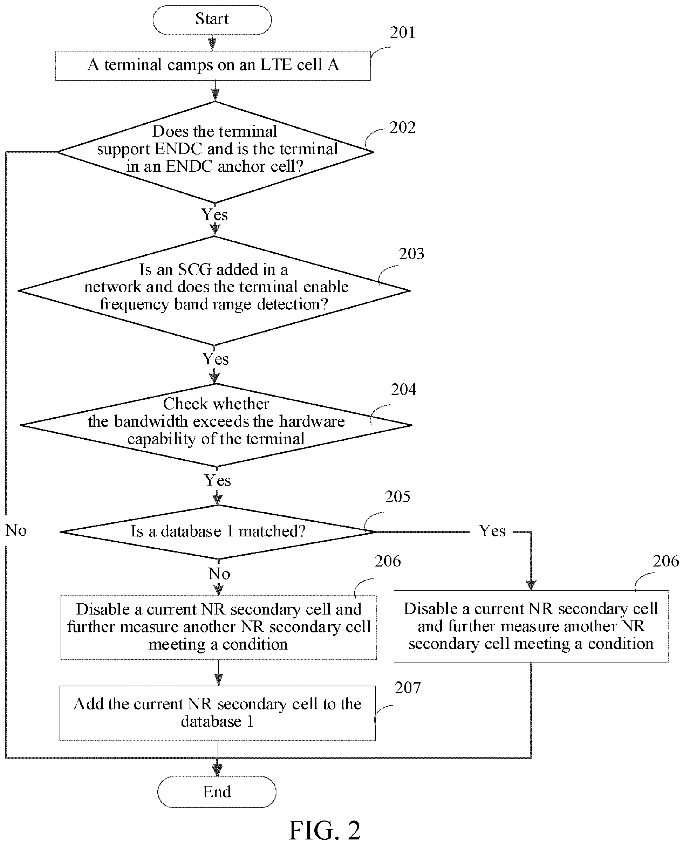

FIG. 2 is a schematic flow chart of NSA registration of a terminal. As shown in FIG. 2, a detailed process of implementing dual connectivity (E-UTRA-NR Dual Connectivity, ENDC) of a 4G base station and a 5G base station in embodiments of this application is as follows.

Step 201: The terminal camps on a long term evolution (Long Term Evolution, LTE) cell A, and proceeds to step 202.

Step 202: Check, in a case that the terminal has enabled an ENDC capability, whether the terminal is in an ENDC anchor cell, and proceed to step 203 in a case that both "UE supports ENDC" and "the terminal is in the ENDC anchor cell" are met, otherwise, end the process.

Step 203: Acquire the following parameters in the RRC reconfiguration message after it is detected that the current network issues an RRC reconfiguration message for adding an SCG: absoluteFrequencyPointA, BW, and SCS in frequencyInfoDL; and absoluteFrequencyPointA, BW, and SCS in frequencyInfoUL.

Software can enable "frequency range detection" for a specific band. In a case that terminal software is configured to enable "frequency range detection", whether it is necessary to start step 204 to detect whether the bandwidth exceeds a limit can be determined through an NR frequency band indicator (FreqBandIndicatorNR).

Step 204: Query Table 1, and calculate the center frequency, the upper boundary frequency, and the lower boundary frequency of the current cell according to the following equation. In a case that the upper and lower boundaries are both within the hardware capability range, it means that registration in the current cell is allowed. Otherwise, registration is not allowed.

Specifically, the calculation process is as follows:
calculating the transmitting frequency of the cell: *F_{REF}* = *F_{REF-Offs} +* Δ*F_{Global}*(*N_{REF}-N_{REF-Offs}*)*;* and
querying Table 1 by using *N_{REF}* = absoluteFrequencyPointA according to the equation to determine *F_{REF-Offs},* Δ*F_{Global},* and *N_{REF-offs},* so as to calculate *F_{REF}.*

*N_{REF}* = absoluteFrequencyPointA , *F_{REF-Offs}* represents an offset of the transmitting frequency, Δ*F_{Global}* represents a global frequency point grid, *N_{REF}* represents a cell frequency point number, and *N_{REF-offs}* represents an offset of the cell frequency point.

In a case that the network configures that offsetToCarrier is not equal to 0,
the center frequency=*F_{REF}* + [(offsetToCarrier + BW) * 12 Subcarrier * BW * SCS * 0.5] (the value of offsetToCarrier is a network configured value); and
in a case that the network does not configure offsetToCarrier, or the network configures that offsetToCarrier is equal to 0,
the center frequency= *F_{REF}* + (BW * 12 Subcarrier * BW * SCS * 0.5),
the upper boundary frequency=the center frequency+(12 Subcarrier * BW * SCS * 0.5), and
the lower boundary frequency=the center frequency-(12 Subcarrier * BW * SCS * 0.5).

Step 205: The terminal locally creates a database 1 (Partial_Band_Disable_List1), and executes step 206 when information on the current cell matches one data in the database, otherwise, executes step 206 and step 207.

Step 206: Disable the current NR secondary cell, generate an error when RRC reconfiguration is printed, report an RRC reconfiguration failure to the network, and further measure another NR secondary cell meeting the condition (a measurement configuration is added in the network).

Step 207: Add information on the current NR secondary cell: the frequency point number (NR-ARFCN) (equivalent to absoluteFrequencySSB in the RRC reconfiguration message), PCI, SCS, and BW, to the database 1.

Database 1 is shown as Table 2:

**Table 2**

| | NR-ARFCN | PCI | SCS (kHz) | BW (MHz) |
|---|---|---|---|---|
| 1 | 370610 | 132 | 15 | 20 |
| 2 | 651360 | 100 | 30 | 60 |
| 3 | | | | |
| ... | | | | |
| n | | | | |

In this embodiment of this application, in a case that the terminal not supporting the full band registers to a full-band ENDC network, frequent SCG addition failures can be avoided, thereby mitigating power consumption increase caused by the SCG and prolonging the battery life of the terminal.

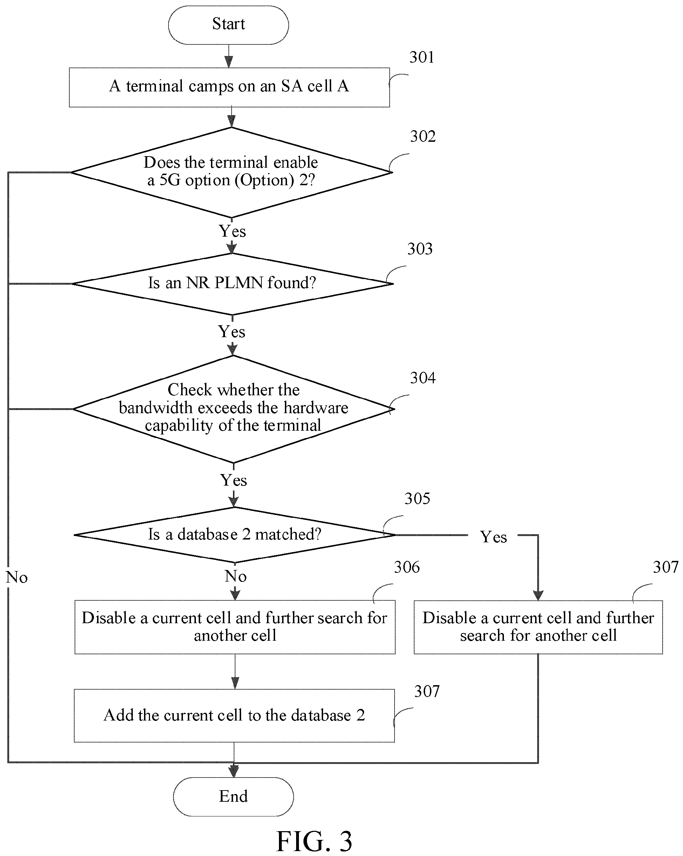

FIG. 3 is a schematic flow chart of SA registration of a terminal. As shown in FIG. 3, a detailed implementation process for an SA network in embodiments of this application is as follows.

Step 301: The terminal camps on an SA cell A, and proceed to step 302.

Step 302: Proceed to step 303 in a case that the terminal has enabled a 5G option (Option) 2 (standalone) capability, otherwise, end the process.

Step 303: Acquire, in a cell search process, in a case that an NR public land mobile network (Public Land Mobile Network, PLMN) is found and a master information block (master information block, MIB) and SIB1 of the system message are acquired at this time, the following parameters in SIB1:
absoluteFrequencyPointA, BW, and SCS in frequencyInfoDL; and
absoluteFrequencyPointA, BW, and SCS in frequencyInfoUL.

Software can enable "frequency range detection" for a specific band. In a case that terminal software is configured to enable "frequency range detection", whether it is necessary to start step 304 to detect whether the bandwidth exceeds a limit can be determined through FreqBandIndicatorNR.

Step 304: Query Table 1, and calculate the center frequency, the upper boundary frequency, and the lower boundary frequency of the current cell according to the following equation. In a case that the upper and lower boundaries are both within the hardware capability range, it means that registration in the current cell is allowed. Otherwise, registration is not allowed.

Specifically, the calculation process is as follows:
calculating the transmitting frequency of the cell: *F_{REF} = F_{REF-Offs} +* Δ*F_{Global}*(*N_{REF}-N_{REF-Offs}*); and
querying Table 1 by using *N_{REF}* = absoluteFrequencyPointA according to the equation to determine *F_{REF-Offs},* Δ*F_{Global},* and *N_{REF-Offs},* so as to calculate *F_{REF}.*

*N_{REF}* = absoluteFrequencyPointA , *F_{REF-offs}* represents an offset of the transmitting frequency, Δ*F_{Global}* represents a global frequency point grid, *N_{REF}* represents a cell frequency point number, and *N_{REF-Offs}* represents an offset of the cell frequency point.

In a case that the network configures that offsetToCarrier is not equal to 0,
the center frequency= *F_{REF}* + [(offsetToCarrier + BW) * 12 Subcarrier * BW * SCS * 0.5], (the value of offsetToCarrier is a network configured value); and
in a case that the network does not configure offsetToCarrier, or the network configures that offsetToCarrier is equal to 0,
the center frequency= *F_{REF}* + (BW * 12 Subcarrier * BW * SCS * 0.5),
the upper boundary frequency=the center frequency+ (12 Subcarrier * BW * SCS * 0.5), and
the lower boundary frequency=the center frequency- (12 Subcarrier * BW * SCS * 0.5).

Step 305: The terminal locally creates a database 2 (Partial_Band_Disable_List2), and executes step 306 when information on the current cell matches one data in the database, otherwise, executes step 306 and step 307.

Step 306: Disable the current cell, not initiate a random access procedure for the cell, and further search for another cell.

Step 307: Add the information on the current cell: NR-ARFCN, PCI, SCS, and BW, to the database 2.

For database 2, refer to database 1 in the foregoing embodiment.

In this embodiment of this application, in a case that the terminal not supporting the full band registers to a full-band SA network, frequent SA registration failures can be avoided, thereby mitigating power consumption increase caused by SA registration, reducing the time of disconnection of the terminal from the network, improving the terminal network camp-on experience and prolonging the terminal battery life.

An execution entity of the cell registration method provided in embodiments of this application may be a terminal. In this embodiment of this application, the terminal provided in embodiments of this application is described by taking executing the cell registration method by a terminal as an example.

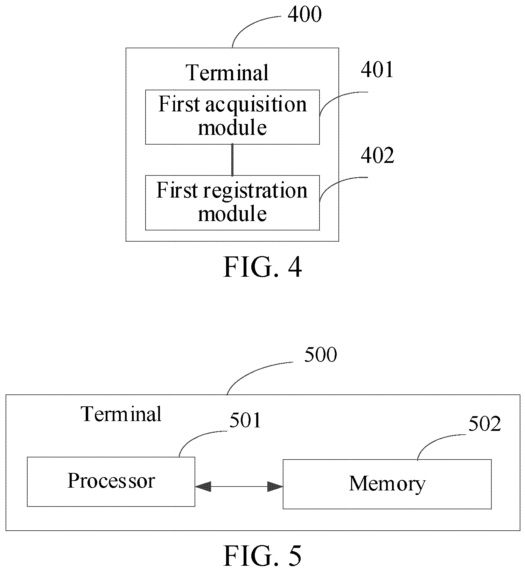

Refer to FIG. 4. FIG. 4 is a schematic diagram of the structure of a terminal according to an embodiment of this application. As shown in FIG. 4, an embodiment of another aspect of this application further provides a terminal. The terminal 400 includes:
a first acquisition module 401, configured to acquire a first frequency band range of a first cell; and
a first registration module 402, configured to prohibit registration of the terminal in the first cell in a case that the first frequency band range is not within a second frequency band range supported by the terminal.

Optionally, the first acquisition module 401 includes:
a first acquisition unit, configured to acquire a first message sent by a network device, where the first message includes a frequency band parameter of the first cell; and
a determining unit, configured to determine the first frequency band range based on the frequency band parameter.

Optionally, the first message further includes a frequency range indication parameter for indicating a target frequency range; and
the determining unit includes:
an acquisition subunit, configured to acquire a preset reference frequency range; and
a first determining subunit, configured to determine the first frequency band range based on the frequency band parameter in a case that the frequency range indication parameter matches the reference frequency range, where the first frequency band range is within the target frequency range.

Optionally, the determining unit includes:
a calculation subunit, configured to calculate an upper boundary frequency and a lower boundary frequency of the first cell based on the frequency band parameter; and
a second determining subunit, configured to determine the first frequency band range based on the upper boundary frequency and the lower boundary frequency; and
the first registration module includes:
   a registration unit, configured to prohibit registration of the terminal in the first cell in a case that at least one of the upper boundary frequency and the lower boundary frequency is not within the second frequency band range.

Optionally, the terminal 400 further includes:
a second acquisition module, configured to acquire historical information and a first cell parameter of the first cell, where the historical information includes a plurality of groups of cell parameters; and
an addition module, configured to add the first cell parameter to the historical information in a case that the plurality of groups of cell parameters do not include the first cell parameter.

Optionally, the terminal 400 further includes:
a third acquisition unit, configured to acquire a second cell parameter of a second cell;
a fourth acquisition module, configured to acquire a third frequency band range of the second cell in a case that the plurality of groups of cell parameters do not include the second cell parameter; and
a second registration module, configured to register in the second cell in a case that the third frequency band range is within the second frequency band range.

Optionally, each group of cell parameters includes at least one of the following:
a physical cell identity; and
a cell frequency point number, a subcarrier spacing, and a carrier bandwidth.

In this embodiment of this application, the first frequency band range of the first cell is compared with the second frequency band range supported by the terminal, and registration of the terminal in the first cell is prohibited in a case that the first frequency band range is not within the second frequency band range supported by the terminal, such that a cyclic registration attempt of the terminal in the frequency band range not supported by the terminal can be avoided, thereby reducing power consumption of the terminal.

The terminal in this embodiment of this application may be an electronic device, or may be a component in an electronic device, such as an integrated circuit or chip. The electronic device may be a terminal, or may be a device other than the terminal. For example, the electronic device may be a mobile phone, a tablet computer, a notebook computer, a palm computer, an in-vehicle terminal, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a personal computer (personal computer, PC) or the like, which are not specifically limited in embodiments of this application.

The terminal in embodiments of this application may be a terminal with an operating system. The operating system may be an Android (Android) operating system, an iOS operating system, or other possible operating systems, which is not specifically limited in embodiments of this application.

The terminal provided in embodiments of this application can implement the processes implemented by the terminal in the method embodiment of FIG. 1. To avoid repetition, details are not described herein again.

Optionally, as shown in FIG. 5, an embodiment of this application further provides a terminal 500, including a processor 501, a memory 502, and a program or instructions stored on the memory 502 and capable of being run on the processor 501, where when the program or instructions are executed by the processor 501, the processes of the embodiment of the cell registration method applied to the terminal are implemented, and the same technical effects can be achieved. To avoid repetition, details are not described herein again.

It should be noted that the terminal in this embodiment of this application may be a mobile electronic device or a non-mobile electronic device.

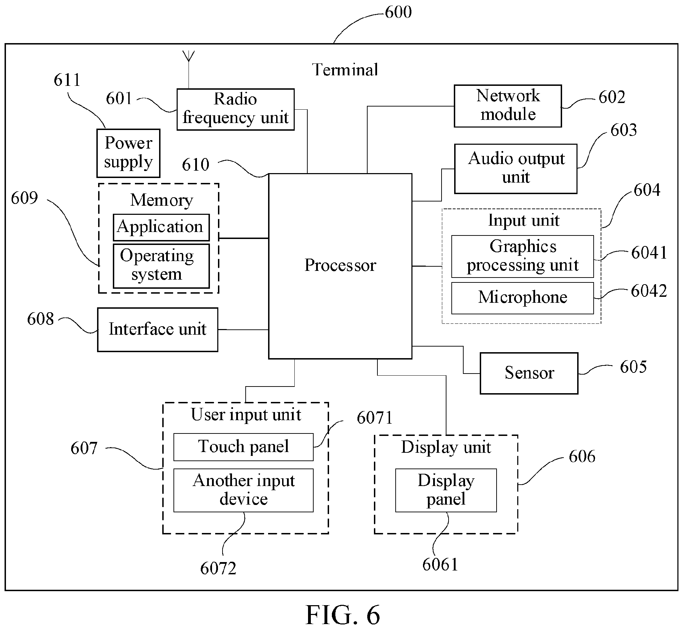

FIG. 6 is a schematic diagram of a hardware structure of a terminal according to an embodiment of this application.

The terminal 600 includes, but is not limited to: components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) for supplying power to the components. The power supply may be logically connected to the processor 610 by a power management system, thereby implementing functions such as charging, discharging, and power consumption management by using the power management system. The terminal structure shown in FIG. 6 does not constitute a limitation on the terminal, and the terminal may include more or fewer components than shown, or combine some components, or have different component arrangements. Details are not described herein again.

The processor 610 is configured to:
acquire a first frequency band range of a first cell; and
prohibit registration of the terminal in the first cell in a case that the first frequency band range is not within a second frequency band range supported by the terminal.

In embodiments of this application, the terminal compares the first frequency band range of the first cell with the second frequency band range supported by the terminal, and prohibits registration of the terminal in the first cell in a case that the first frequency band range is not within the second frequency band range supported by the terminal, such that a cyclic registration attempt of the terminal in the frequency band range not supported by the terminal can be avoided, thereby reducing power consumption of the terminal.

Optionally, the acquiring a first frequency band range of a first cell includes:
acquiring a first message sent by a network device, where the first message includes a frequency band parameter of the first cell; and
determining the first frequency band range based on the frequency band parameter.

Optionally, the first message further includes a frequency range indication parameter for indicating a target frequency range; and
the determining the first frequency band range based on the frequency band parameter includes:
acquiring a preset reference frequency range; and
determining the first frequency band range based on the frequency band parameter in a case that the frequency range indication parameter matches the reference frequency range, where the first frequency band range is within the target frequency range.

Optionally, the determining the first frequency band range based on the frequency band parameter includes:
calculating an upper boundary frequency and a lower boundary frequency of the first cell based on the frequency band parameter; and
determining the first frequency band range based on the upper boundary frequency and the lower boundary frequency; and
the prohibiting registration of the terminal in the first cell in a case that the first frequency band range is not within a second frequency band range supported by the terminal includes:
   prohibiting registration of the terminal in the first cell in a case that at least one of the upper boundary frequency and the lower boundary frequency is not within the second frequency band range.

Optionally, the processor 610 is further configured to:
acquire historical information and a first cell parameter of the first cell, where the historical information includes a plurality of groups of cell parameters; and
add the first cell parameter to the historical information in a case that the plurality of groups of cell parameters do not include the first cell parameter.

Optionally, the processor 610 is further configured to:
acquire a second cell parameter of a second cell;
acquire a third frequency band range of the second cell in a case that the plurality of groups of cell parameters do not include the second cell parameter; and
registering in the second cell in a case that the third frequency band range is within the second frequency band range.

Optionally, each group of cell parameters includes at least one of the following:
a physical cell identity; and
a cell frequency point number, a subcarrier spacing, and a carrier bandwidth.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image acquisition device (for example, a camera) in a video acquisition mode or an image acquisition mode. The display unit 606 may include a display panel 6061, and the display panel 6061 may be configured by using a liquid crystal display, an organic light-emitting diode, or the like. The user input unit 607 includes at least one of a touch panel 6071 and another input device 6072. The touch panel 6071 may also be referred to as a touch screen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick, which are not repeated herein.

The memory 609 is configured to store a software program or instructions and various data. The memory 609 may mainly include a program or instruction storage area and a data storage area. The program or instruction storage area may store an operating system, an application or instructions required by at least one function (such as a sound playback function and an image display function), and the like. In addition, the memory 609 may include a highspeed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. A volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes, but is not limited to, these memories and any other suitable types.

The processor 610 may include one or more processing units. Optionally, the processor 610 integrates an application processor and a modem processor, where the application processor mainly processes operations related to an operating system, a user interface, an application, and the like, and the modem processor mainly processes wireless communication signals, for example, a baseband processor. It may be understood that the modem processor may not be integrated into the processor 610.

An embodiment of this application further provides a chip, where the chip includes a processor and a communication interface, the communication interface is coupled to the processor, and the processor is configured to run a program or instructions to implement the processes of the embodiment of the cell registration method and achieve the same technical effects. To avoid repetition, details are not described herein again.

It should be understood that the chip mentioned in this embodiment of this application may also be referred to as a system on chip, a system chip, a chip system, or a system-on-chip, or the like.

An embodiment of this application further provides a computer program product, where the program product is stored in a storage medium, and the program product is executed by at least one processor to implement the processes of the embodiment of the cell registration method and can achieve the same technical effects. To avoid repetition, details are not described herein again.

An embodiment of this application further provides a communication device, configured to implement the processes of the embodiment of the cell registration method and capable of achieving the same technical effects. To avoid repetition, details are not described herein again.

It should be noted that the terms "include", "comprise" or any other variants thereof in this application are intended to cover non-exclusive inclusion, so that a process, method, article or apparatus that includes a series of elements includes not only those elements, but also other elements that are not explicitly listed or elements inherent to the process, method, article, or apparatus. If no more limitations is made, an element defined by a phrase "including one..." does not exclude that there are other identical elements in the process, method, article or apparatus including the element. In addition, it should be noted that the scope of the method and apparatus in embodiments of this application is not limited to implementing functions in the order shown or discussed, but may also include implementing functions in a substantially simultaneous manner or in a reverse order according to the functions involved. For example, the described method may be performed in an order different from that described, and various steps may be added, omitted, or combined. In addition, features described in some examples may also be combined in other examples.

According to the descriptions in the foregoing embodiments, a person skilled in the art can clearly learn that the method according to the foregoing embodiment may be implemented by relying on software and a necessary general hardware platform, and of course, may alternatively be implemented by hardware, but in many cases, the former relates to better implementations. Based on such an understanding, the technical solutions of this application essentially, or the part contributing to the conventional technologies, may be presented in the form of a software product. The computer software product is stored in a storage medium (for example, a ROM/RAM, a magnetic disk, or an optical disc) including several instructions to enable an electronic device (which may be a mobile phone, a computer, a server, a network device, or the like) to perform the method described in embodiments of this application.

Embodiments of this application have been described above with reference to the accompanying drawings. This application is not limited to the specific embodiments above, and the specific embodiments above are merely exemplary and not limitative. Those of ordinary skill in the art may make various variations under the teaching of this application without departing from the spirit of this application and the protection scope of the claims, and such variations shall all fall within the protection scope of this application.

## Claims

1. A cell registration method, applied to a terminal, and comprising:
acquiring a first frequency band range of a first cell; and
prohibiting registration of the terminal in the first cell in a case that the first frequency band range is not within a second frequency band range supported by the terminal.

2. The method according to claim 1, wherein the acquiring a first frequency band range of a first cell comprises:
acquiring a first message sent by a network device, wherein the first message comprises a frequency band parameter of the first cell; and
determining the first frequency band range based on the frequency band parameter.

3. The method according to claim 2, wherein the first message further comprises a frequency range indication parameter for indicating a target frequency range; and
the determining the first frequency band range based on the frequency band parameter comprises:
acquiring a preset reference frequency range; and
determining the first frequency band range based on the frequency band parameter in a case that the frequency range indication parameter matches the reference frequency range, wherein the first frequency band range is within the target frequency range.

4. The method according to claim 2 or 3, wherein the determining the first frequency band range based on the frequency band parameter comprises:
calculating an upper boundary frequency and a lower boundary frequency of the first cell based on the frequency band parameter; and
determining the first frequency band range based on the upper boundary frequency and the lower boundary frequency; and
the prohibiting registration of the terminal in the first cell in a case that the first frequency band range is not within a second frequency band range supported by the terminal comprises:
prohibiting registration of the terminal in the first cell in a case that at least one of the upper boundary frequency and the lower boundary frequency is not within the second frequency band range.

5. The method according to claim 1, wherein after the prohibiting registration of the terminal in the first cell, the method further comprises:
acquiring historical information and a first cell parameter of the first cell, wherein the historical information comprises a plurality of groups of cell parameters; and
adding the first cell parameter to the historical information in a case that the plurality of groups of cell parameters do not comprise the first cell parameter.

6. The method according to claim 5, wherein after the prohibiting registration of the terminal in the first cell, the method further comprises:
acquiring a second cell parameter of a second cell;
acquiring a third frequency band range of the second cell in a case that the plurality of groups of cell parameters do not comprise the second cell parameter; and
registering in the second cell in a case that the third frequency band range is within the second frequency band range.

7. The method according to claim 5, wherein each group of cell parameters comprises at least one of the following:
a physical cell identity; and
a cell frequency point number, a subcarrier spacing, and a carrier bandwidth.

8. A terminal, comprising:
a first acquisition module, configured to acquire a first frequency band range of a first cell; and
a first registration module, configured to prohibit registration of the terminal in the first cell in a case that the first frequency band range is not within a second frequency band range supported by the terminal.

9. The terminal according to claim 8, wherein the first acquisition module comprises:
a first acquisition unit, configured to acquire a first message sent by a network device, wherein the first message comprises a frequency band parameter of the first cell; and
a determining unit, configured to determine the first frequency band range based on the frequency band parameter.

10. The terminal according to claim 9, wherein the first message further comprises a frequency range indication parameter for indicating a target frequency range; and
the determining unit comprises:
an acquisition subunit, configured to acquire a preset reference frequency range; and
a first determining subunit, configured to determine the first frequency band range based on the frequency band parameter in a case that the frequency range indication parameter matches the reference frequency range, wherein the first frequency band range is within the target frequency range.

11. The terminal according to claim 9 or 10, wherein the determining unit comprises:
a calculation subunit, configured to calculate an upper boundary frequency and a lower boundary frequency of the first cell based on the frequency band parameter; and
a second determining subunit, configured to determine the first frequency band range based on the upper boundary frequency and the lower boundary frequency; and
the first registration module comprises:
a registration unit, configured to prohibit registration of the terminal in the first cell in a case that at least one of the upper boundary frequency and the lower boundary frequency is not within the second frequency band range.

12. The terminal according to claim 8, further comprising:
a second acquisition module, configured to acquire historical information and a first cell parameter of the first cell, wherein the historical information comprises a plurality of groups of cell parameters; and
an addition module, configured to add the first cell parameter to the historical information in a case that the plurality of groups of cell parameters do not comprise the first cell parameter.

13. The terminal according to claim 12, further comprising:
a third acquisition unit, configured to acquire a second cell parameter of a second cell;
a fourth acquisition module, configured to acquire a third frequency band range of the second cell in a case that the plurality of groups of cell parameters do not comprise the second cell parameter; and
a second registration module, configured to register in the second cell in a case that the third frequency band range is within the second frequency band range.

14. The terminal according to claim 12, where each group of cell parameters comprises at least one of the following:
a physical cell identity; and
a cell frequency point number, a subcarrier spacing, and a carrier bandwidth.

15. A terminal, comprising a processor and a memory, wherein the memory stores a program or instructions capable of being run on the processor, and when the program or instructions are executed by the processor, the steps of the cell registration method according to any one of claims 1 to 7 are implemented.

16. A readable storage medium, wherein a program or instructions are stored in the readable storage medium, and when the program or instructions are executed by a processor, the steps of the cell registration method according to any one of claims 1 to 7 are implemented.

17. A chip, comprising a processor and a communication interface, wherein the communication interface is coupled to the processor, and the processor is configured to run a program or instructions to implement the steps of the cell registration method according to any one of claims 1 to 7.

18. A computer program product, wherein the program product is stored in a non-volatile storage medium, and the program product is executed by at least one processor to implement the steps of the cell registration method according to any one of claims 1 to 7.

19. A communication device, configured to perform the cell registration method according to any one of claims 1 to 7.
